# EUROPEAN PATENT SPECIFICATION

(11) **EP 0 376 720 B1**
(45) Date of publication and mention of the grant of the patent: **05.05.1993**
(21) Application number: 89313645.7
(22) Date of filing: 28.12.1989
(51) Int. Cl.: B65D 19/42

(54) **Carrier pallet**
Palette
Palette

(30) Priority: 28.12.1988 JP 335434/88
(43) Date of publication of application: 04.07.1990
(73) Proprietor: TOKYU CAR CORPORATION, Yokohama-shi Kanagawa-ken (JP); KOBE STEEL LIMITED, Tokyo (JP); TRADE OCEAN LINE LIMITED, Tokyo (JP); SHINKO KAKOGAWA KOUUN COMPANY LIMITED, Kakogawa-Shi Hyogo-Ken (JP); NAVIX LINE LIMITED, Tokyo (JP)
(72) Inventor: Morikawa, Tadao c/o Tokyu Car Corporation, Kanagawa-Ken, Tokyo (JP); Kitamori Ryuichi c/o Kobe Steel Ltd., Tokyo (JP); Tsuchiya, Mazanori c/o Trade Ocean Line Ltd., Tokyo (JP); Fujise, Sumiomi c/o Navix Line Ltd., Chiyoda-Ku Tokyo (JP); Nakanoshita, Minoru, c/o Shinko Kakogawa Kouun Co, Hyogo-Ken (JP)
(74) Representative: Davies, Christopher Robert

(56) References cited:
- DE-U- 8 804 182
- GB-A- 1 326 304
- US-A- 2 814 498
- US-A- 4 231 695

## Description

This invention relates to a carrier pallet utilized to store, stevedore and transport such cylindrical goods as steel plate coils and wire coils and such various other goods as heavy articles, long articles, general goods and house-moving baggages.

Heretofore, after such cylindrical goods as, for example, the above mentioned steel plate coils and wire coils are manufactured, in order to make it easy to handle them, they have been mounted on a bed formed merely to be like an inverted U in cross-section by means of a crane or the like and have been moved together with the bed to a storing place.

A special machine has been used to move the goods together with the above mentioned bed. In the case of transporting the cylindrical goods, first of all, they have been moved together with the above mentioned bed to a predetermined stevedoring place from the storing place and then have been individually transferred to a transporting ship, trailer or truck so as to be transported. However, once the cylindrical goods are mounted on the above mentioned bed, then moved, stored, and moved again from the storing place to the stevedoring place and then individually transferred to a transporting ship, trailer or truck, great trouble must be taken to, for example, avoid stevedoring when it rains and therefore the costs of stevedoring and transporting the goods will be enormous. It has been desired to rationalize the costs.

The above mentioned circumstances also apply in the case of not only the above mentioned cylindrical goods but also various other goods.

According to the present invention which is based on the carrier pallet disclosed in GB-A-1 326 304 there is provided a carrier pallet comprising a bed on which goods are to be mounted, which is provided on its lower surface with legs having first running means provided at the ends thereof, wherein the length of the legs may be varied to adjust the height of the bed when the bed is being supported by the legs, and characterised in that the legs are foldable into retracted positions and the pallet further comprises second running means such that the pallet can run in the same direction when the legs are in their retracted positions.

In preferred embodiments of the present invention, guide rollers may be provided to project from both side surfaces of the bed and the first and second running means are rollers.

Thus in preferred embodiments, the bed with the leg part extended and various goods mounted on the upper surface may be moved on the above mentioned first running rollers and it is not necessary to prepare a special machine for the movement as in the past. That is to say, the pallet functions as a carriage.

The above mentioned cylindrical goods are moved together with the carrier pallet by running from the storing place to a predetermined stevedoring place and may be mounted on a container, trailer or truck by the following method. Since the legs are variable in length they may be adjusted such that the level of the second running rollers provided on the lower surface of the bed is made to coincide with the level of the floor surface of the container or trailer. The carrier pallet may be moved to the above mentioned container or trailer side on the first running rollers at the ends of the legs, the second running rollers provided on the lower surface of the bed may be run on to the floor surface of the above mentioned container or trailer from the front and at the same time the legs retracted in order from the front so that finally the carrier pallet with the cylindrical goods mounted on the upper surface and with all the legs retracted may be mounted on the above mentioned container or trailer.

If guide rollers are provided to project on both side surfaces of the bed, at the time of the above mentioned mounting, the guide rollers may rotate in contact with the side walls of the container or trailer, to facilitate the mounting and to avoid damaging the side walls of the container or trailer.

When a carrier pallet as described above is used as mentioned above, the cylindrical goods will not be required to be individually transferred to the container or trailer and further the binding operation in such limited narrow space as in the container may be able to be omitted.

Thus the preferred pallet of the present invention not only functions as of a carriage but also as a stevedoring pallet.

To unload the goods at the destination of the transportation, an operation reverse to that at the time of the above described loading may be made.

The above explanation has been described with reference to cylindrical goods but is the same also on the abovementioned various other goods.

The above mentioned pallet can be used to store goods if the goods are mounted and are then covered with a sheet or the like and has both functions as of a carriage and as of a stevedoring pallet, therefore cylindrical goods and various other goods can be efficiently and easily stored, stevedored and transported and the costs of circulation of goods can be greatly reduced.

Thus it will be seen that the invention provides an apparatus whereby the above mentioned cylindrical goods and other goods can be efficiently and simply stored, stevedored and transported and the costs of such circulation of goods as storing, stevedoring and transporting them as mentioned above can be greatly reduced.

The invention will now be described, by way of example only, with reference to the following drawings in which:

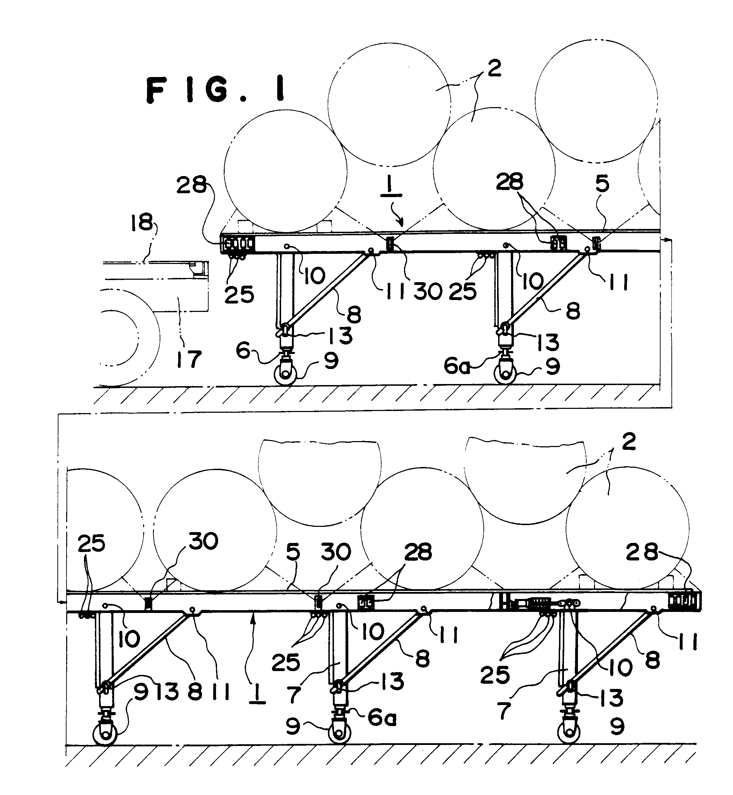

Fig. 1 is a partly sectioned elevation of an embodiment of the invention;
Fig. 2 is a partly sectioned plan view of legs in a retracted position;
Fig. 3 is a partly sectioned end view of Figure 1;
Fig. 4 is an elevation showing a leg retracted;
Fig. 5 is a partly sectioned plan view of the same;
Fig. 6 is a perspective view showing a leg in an extended position; and
Fig. 7 is an elevation showing a variable length structure of a leg.

In the drawings, the reference numeral 1 represents a flat bed. In the case of the embodiment in the drawings, this flat bed 1 comprises outer beams 3 provided on both sides, inner beams 3a provided in parallel at a proper distance respectively inside the outer beams 3, cross-members 4 integrally framing the above mentioned outer beams 3 and inner beams 3a and an upper plate 5 provided above them. The above mentioned outer beams 3 provided on both sides are made of steel members channel-like in cross-section and having the opening parts directed outwardly. Legs 7 and leg fixing frames 8 are pivotted at the upper ends between the above mentioned outer beam 3 and inner beam 3a.

The above mentioned flat bed 1 is made plane on the upper surface by the upper plate 5 in the case of the illustrated embodiment but may have cylindrical goods receiving parts formed as required in the case of transporting cylindrical goods and further may be provided with a fastening apparatus, binding apparatus or skid. In the present embodiment, foldable, retractable legs 7 are provided below the above mentioned flat bed 1 and further, first running rollers 9 are provided at the ends of the legs 7.

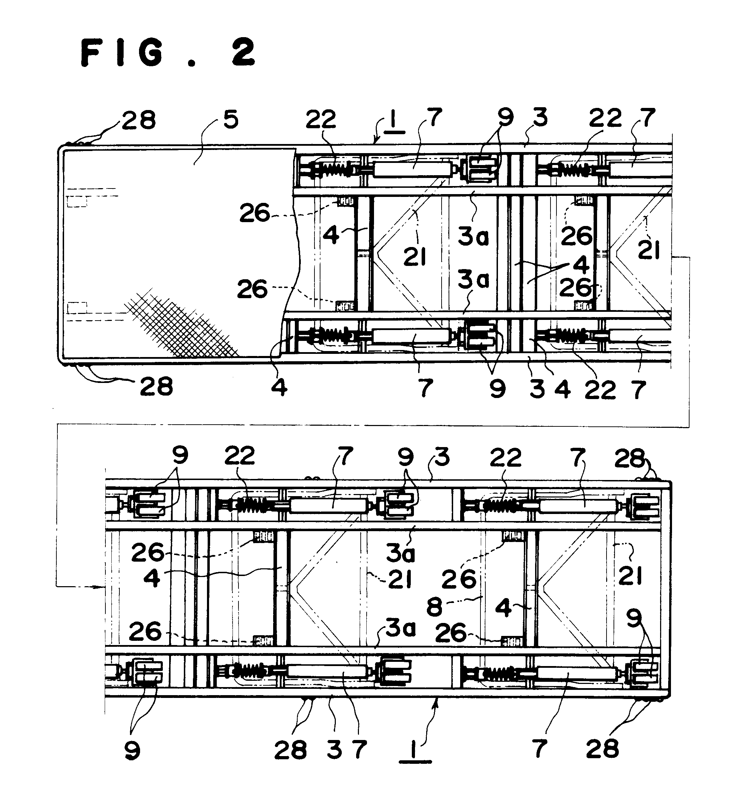

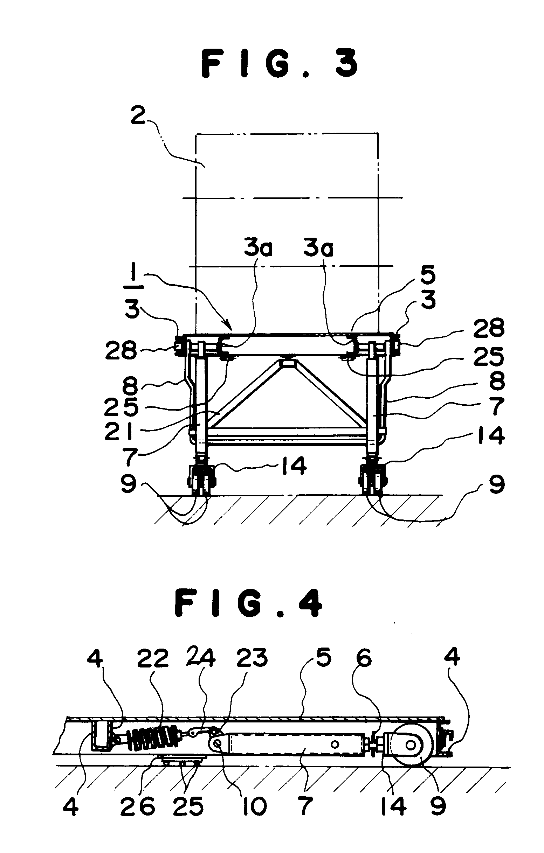

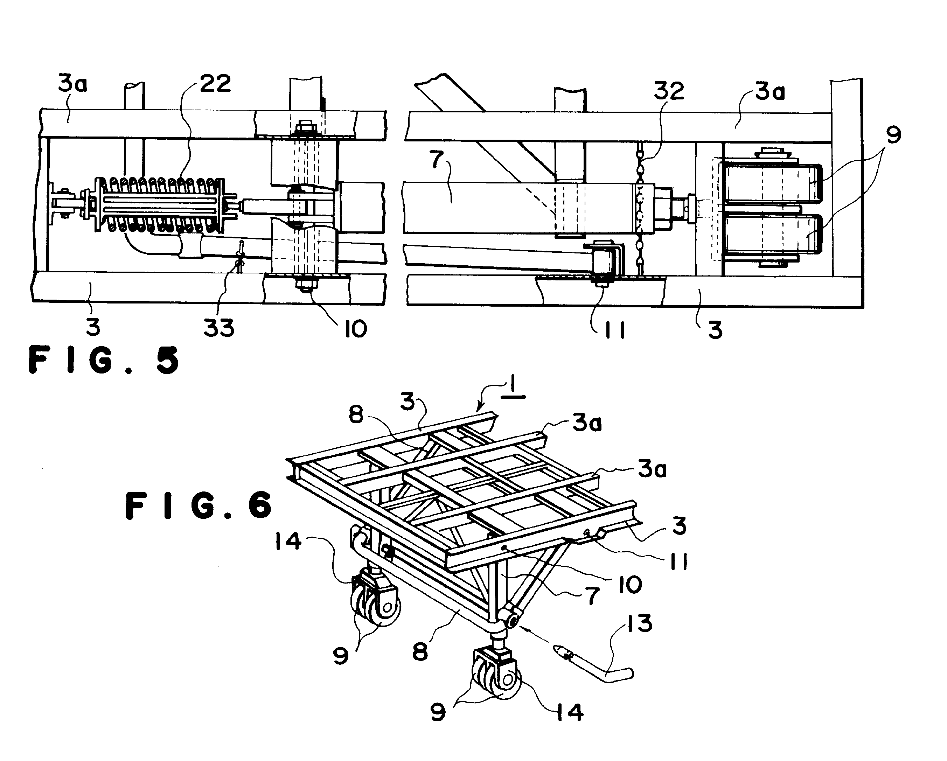

In the case of the illustrated embodiment, as shown in Figs. 2 to 6, the above mentioned legs 7 are fitted at the upper ends to shafts 10 between the outer beams 3 and inner beams 3a on both sides forming the above mentioned flat bed 1. Also, leg fixing frames 8 for fixing the above mentioned legs 7 in the extended position are fitted at the upper ends by shafts 11 within the outer beams 3 on both sides. As shown in Fig. 6, the leg fixing frames 8 are connected at the end parts and are securable by folded pins 13 near the ends of the above mentioned legs 7. Further, the above mentioned legs 7 are provided at their ends with bearings 14 of the first running rollers 9 and the above mentioned first running rollers 9 are borne by the beaings 14 so as to be free to run. The above mentioned first running rollers 9 may be fitted rotatably as by casters provided on chairs or the like. In the case of the illustrated embodiment, two first running rollers 9 are provided in parallel on each leg but the number of the rollers is not limited. The above mentioned first running rollers 9 may be provided with locking devices for stopping the running. In the drawings, the reference numerals 32 and 33 represent chains holding the above mentioned legs 7 and leg fixing frames 8 in the retracted position when they are folded up between the above mentioned outer beams 3 and inner beams 3a.

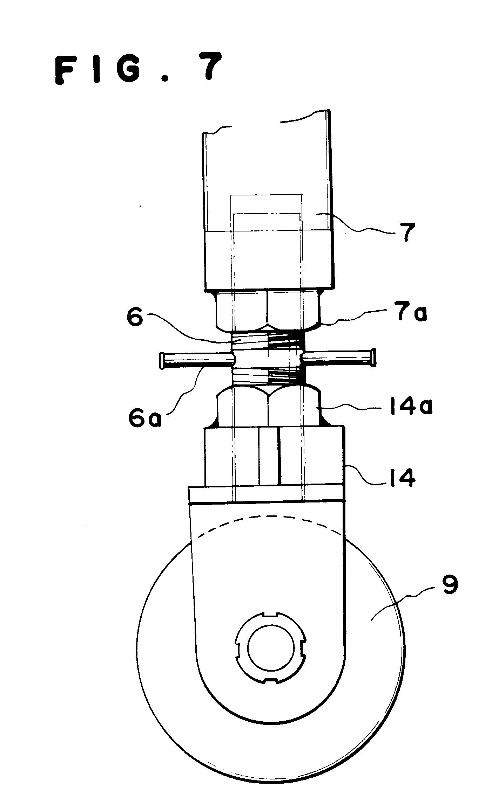

Also, in the case of the illustrated embodiment, in order to make it easy to match the level of the pallet to the floor surface 18 or the like of a trailer 17, the above mentioned legs 7 are formed to be variable in length, e.g. telescopic. As shown in Fig. 7 nuts 7a are secured to the lower ends of the above mentioned legs 7, nuts 14a are secured also to the bearing 14 sides of the first running rollers 9 and bolts 6 having male screws formed in both end directions are rotatably screwed between both nuts 7a and 14a. In the drawings, the reference numeral 6a represents a bolt 6 rotating handle.

In the case of the illustrated embodiment, five of the above mentioned legs 7 are provided respectively on both sides of the above mentioned flat bed 1 but the number and positions of them are not specifically limited.

In the drawings, the reference numeral 21 represents a truss-like connecting member jointing and reinforcing the legs 7 opposed to each other on both sides and 22 represents a spring provided between a link 24 connected to an upper end bracket 23 of the above mentioned leg part 7 and the above mentioned cross-member 4 so that the force required to fold the leg part 7 up into a retracted position may be thereby reduced.

Further, in the present embodiment roller-like second running rollers 25 for running on a floor surface 18 or the like when the above mentioned legs 7 are retracted are provided on the lower surface of the above mentioned flat bed 1.

In the case of the illustrated embodiment, brackets 26 are provided respectively below the inner beams 3a forming the above mentioned flat bed 1 and are rotatably fitted with the above mentioned roller-like second running rollers 25.

Also, in the illustrated embodiment, guide rollers 28 are provided within the outer beams 3 with the opening parts directed outward and are projected on both side surfaces of the flat bed 1 so as to act as guides to prevent the sides of the flat bed 1 from tending to slide inside the side walls of a container in case the carrier pallet is to be carried into the container by the above mentioned second running rollers 25. Therefore, it is preferred to provide the above mentioned guide rollers 28. In the drawings, the reference numeral 30 represents a rushing hook.

In a preferred method of operation after the goods 2 are manufactured, the respective legs 7 are extended below the flat bed 1, the respective leg fixing frames 8 are secured at the ends by the bent pins 13 to the respective legs 7 near the ends and, in this state, the goods 2 are mounted on the flat bed 1 by using a crane or the like, are bound by utilizing the rushing hooks 30 and are moved to be stored in a predetermined place the same as in the past. As the legs 7 are provided at their ends with the first running rollers 9, the goods can be moved by running as they are to the stevedoring place or the like by utilizing the above mentioned first running rollers 9. That is to say, the pallet functions as a carriage.

Since the legs 7 are formed to be telescopic as described above, the legs 7 may be adjusted in length in advance so that the level of the second running rollers 25 provided on the lower surface of the flat bed 1 may coincide with the level of the floor surface 18 or the like of the trailer 17 or the like on to which the pallet is to be mounted.

When transporting the goods 2, the goods will be moved together with the carrier pallet by running the same as is described above from the storing place to a predetermined stevedoring place and will be mounted on the trailer 17 or the like by the following method. The carrier pallet is made to run toward the above mentioned trailer 17 or the like on the first running rollers 9, the second runing rollers 25 provided on the lower surface of the flat bed 1 are run on to the floor surface of the above mentioned trailer or the like in order from the front, and at the same time, the legs 7 have the folded pins 13 disengaged, in order, from the front and the legs 7 and leg fixing frames 8 are then retracted in turn so that finally the carrier pallet with the goods 2 mounted on the flat bed 1 and with all the legs 7 folded up may be mounted on the above mentioned trailer 17 or the like. During this mounting operation, all the loads will be supported by the first runing rollers 9 provided at the ends of the legs 7 or by the second running rollers 25 provided on the lower surface of the flat bed 1, and therefore it will not be necessary to use a crane or the like as in the past and such trouble as transferring the goods 2 to a separate pallet solely for transportation will be unnecessary. That is to say, the pallet functions also as a stevedoring pallet.

At the destination of the transportation, an operation reverse to the above described mounting operation may be made.

Thus it will be seen that there is provided a pallet which functions not only as a carriage but also as a stevedoring pallet and has such effects that cylindrical goods and various other goods can be efficiently and simply stored, stevedored and transported and the costs of circulation of goods can be greatly reduced.

## Claims

1. A carrier pallet comprising a bed (1) on which goods are to be mounted, which is provided on its lower surface with legs (7) having first running means (9) provided at the ends thereof, wherein the length of the legs (7) may be varied to adjust the height of the bed when the bed is being supported by the legs, and characterised in that:
the legs (7) are foldable into retracted positions and the pallet further comprises second running means (25) such that the pallet can run in the same direction when the legs (7) are in their retracted positions.

2. A carrier pallet according to claim 1 wherein guide rollers (28) are provided which project from both side surfaces of said bed (1).

3. A carrier pallet as claimed in any preceding claim wherein said first and second running means (9,25) are rollers.

## Patentansprüche

1. Trägerpalette mit einer Unterlage (1) zum Anbringen von Gütern darauf, die an ihrer Unterfläche mit an ihren Enden erste Fahrmittel (9) aufweisenden Beinen (7) versehen ist, wobei die Länge der Beine (7) zur Höheneinstellung der Unterlage bei Abstützung der Unterlage durch die Beine veränderbar ist,
**dadurch gekennzeichnet**, daß die Beine (7) in eingezogene Positionen klappbar sind und die Palette weiter zweite Fahrmittel (25) aufweist, so daß die Palette in der selben Richtung fahren kann, wenn die Beine (7) in ihren eingefahrenen Positionen sind.

2. Trägerpalette nach Anspruch 1, in der Führungsrollen (28) vorgesehen sind, die von beiden Seitenflächen der Unterlage (1) vorstehen.

3. Trägerpalette nach einem der vorhergehenden Ansprüche, in der die ersten und zweiten Fahrmittel (9,25) Rollen sind.

## Revendications

1. Une palette de support comprenant un plateau (1) sur lequel des marchandises doivent être placées, qui comporte sur sa face inférieure des jambes (7) munies à leurs extrémités de premiers moyens de déplacement (9), dans laquelle la longueur des jambes (7) peut être modifiée pour régler la hauteur du plateau lorsque le plateau est supporté par les jambes, et caractérisée en ce que :
les jambes (7) sont pliables dans des positions rétractées et la palette comprend de plus des seconds moyens de déplacement (25) tels que la palette peut se déplacer dans la même direction lorsque les jambes (7) se trouvent dans leurs positions rétractées.

2. Une palette de support suivant la revendication 1, dans laquelle des galets de guidage (28) sont prévus qui font saillie à partir des deux surfaces latérales dudit plateau (1).

3. Une palette de support suivant l'une quelconque des revendications précédentes, dans laquelle lesdits premiers et seconds moyens de déplacement (9, 25) sont des roulettes.
